Europäisches Patentamt

(19) European Patent Office

Office européen des brevets

(11) Publication number: **0 094 546**
**B1**

(12) EUROPEAN PATENT SPECIFICATION

(45) Date of publication of patent specification: 11.11.87

(51) Int. Cl.⁴: **G 06 F 15/20**

(21) Application number: 83104302.1

(22) Date of filing: 02.05.83

(54) Footnote management for display and printing.

(30) Priority: 17.05.82 US 378936

(43) Date of publication of application:
23.11.83 Bulletin 83/47

(45) Publication of the grant of the patent:
11.11.87 Bulletin 87/46

(84) Designated Contracting States:
DE FR GB IT

(56) References cited:
GB-A- 771 551
US-A-2 762 485
IBM TECHNICAL DISCLOSURE BULLETIN, Vol.
24, No. 11B, April 1982, NEW YORK (US). R.C.
NIELSEN: "Adjusting a cross page end code for
pagination".
INFORM. STOR. RETR., Vol. 10, No. 5/6,
Pergamon Press 1974, OXFORD (GB). V.J.
RYAN et al.: "Computerized text editing and
processing with built-in indexing". Pages 211-
228.

(73) Proprietor: **International Business Machines
Corporation
Old Orchard Road
Armonk, N.Y. 10504 (US)**

(72) Inventor: **Repass, James Terry
13013 Broadmeade Avenue
Round Rock Texas 78664 (US)**
Inventor: **Ruiz, Thomas Michael
7407 Attar Cove
Austin Texas 78759 (US)**
Inventor: **Shipp, Kenneth Osborn, Jr.
1108 Gemini Drive
Austin Texas 78758 (US)**
Inventor: **Wood, Richard Brian
808 Cambridge
Round Rock Texas 78664 (US)**

(74) Representative: **Bonneau, Gérard
Compagnie IBM France Département de
Propriété Intellectuelle
F-06610 La Gaude (FR)**

Courier Press, Leamington Spa, England.

EP 0 094 546 B1

# 0 094 546

**Description**

Technical field

This invention relates generally to footnoting documents, and more specifically to a method of, and system for, managing numbering of footnotes and footnote references during input, updating and document assembly.

Background art

Footnoting of a document such as a legal brief, book, manuscript, etc., is a well known technique of providing both uncluttered and smooth flowing information and thoughts, and background or supporting detail to a reader at different locations within the documents. The smooth flowing information is the body text of a document, and the supporting detail is made up of footnote text. In constructing such a document, efficient management has always been an elusive skill.

This was so when documents were handwritten, and still presents a significant economic and throughput burden today. This is so even with the availability of flexible keyboard/display word processing systems.

During the handwritten document era, footnote number management was a major problem which, required a great deal of writer attention. Simple numbering of footnote references and footnotes, standing alone was fraught with problems. An author in referencing a footnote could readily apply an appropriate number to both a reference point and corresponding footnote if the number for a prior reference and footnote were recalled or on the same page. However, a loss of recollection and an absence of a prior same page number required either a note pad and pen or leafing through previously prepared pages. Obtaining a final inked copy with a minimum number of drafts required particular writer attention. Editing of inked copy was unacceptable, if not impossible. Paint and lift-off compositions are more modern day conveniences.

The above mentioned problems have not yet been suitably addressed. One system on the market today provides for footnote management upon printout. With this system, an operator can prepare a footnoted document in one pass, but particular operator attention is required. During preparation, body text is keyed to a body text frame up to a reference point, a footnote reference number is keyed, a footnote frame is called, a corresponding footnote number is keyed, text for the footnote is keyed, and then the body text frame is recalled. Body and footnote text are stored separately. The footnote text is stored in a footnote library for later recall. Following document preparation there is an opportunity to separately review and edit the body and footnote text, there is no opportunity to display review and edit an assembled document prior to printing. That is, the first opportunity an operator has to view an assembled document is following printing. During printout, the system merges the body and footnote text. On the whole, planning and multiple drafts are reduced, and preparation is in a logical manner. Even so, glaring editing disadvantages still exist. The most notable is that the ability to efficiently edit and/or make changes is severely restricted. An example of a result of a simple editing attempt is loss of correspondence between footnote reference numbers and footnote numbers if footnotes are to be added, intermingled, repositioned, etc. Inserting a reference number among existing reference numbers requires a subsequent additional operation for renumbering all following reference numbers. This is also the case for footnote numbers if a footnote is to be inserted or deleted. Another disadvantage is the above mentioned attention that is required of an operator. An error in either a footnote reference number or a footnote number can either prevent later document assembly during printout, or require additional editing and printout.

From the above, modern day keyboard/display word processing systems, although beneficial in many respects, have not been structured and/or programmed to efficiently handle even rather simple numbering problems. For one thing, many envisioned approaches to handling even mundane author desires required programming and/or structure additions which would be prohibitive from a cost standpoint. With this in mind, any thoughts of providing for different types of numbers such as Arabic numerals and graphic symbols, and intermixing these types of numbering, have quickly been abandoned. This fact has not been diminished in any respect when a desire to reset numbering on a chapter basis has been considered. When these considerations are coupled with the fact that separately stored body and footnote text must be brought together with a reasonable per page correspondance between footnote references and corresponding footnotes, there has been a compounding of the envisioned tasks and problems.

The above described capabilities of penmanship and word processing systems are prior art to the extent that a semblance of a desired end result can be laboriously achieved. What has not been achievable though, are the flexibility to efficiently both meet author desires and manage numbering tasks from input to output. It is these deficiencies which cause the prior art to fall short of either anticipating or rendering the instant invention obvious. More specifically, the instant invention presents an advance over prior art systems and techniques in that on-line footnote/body text preparation capabilities are provided, automatic system reference/footnote numbering and updating are provided during both input and editing, and a capability of displaying a page to be printed is provided.

Disclosure of the invention

A unique method of managing numbering of footnotes from input to output is provided in order to

2

reduce planning and multiple drafts, increase throughput, and remove normal editing restrictions, and enables an operator to input a footnoted document during a single pass.

During the input of a document by the operator body text is keyed up to a reference number point. During this body text keying, the text is displayed and editing is permitted. At the reference number point, a reference control is keyed and a display frame is presented for keying the footnote. Editing of the footnote is also permitted. Following input of the footnote, the operator returns to the body text display frame for continued keying, and the footnote is stored away in a footnote library.

The method of the invention is characterized by the following steps which are performed automatically by the processor: numbering a footnote reference point in the body text following preparation of a corresponding footnote, numbering the corresponding footnote with the same number used for numbering the footnote reference point, and merging the footnote text and the body text to form a footnoted document which can be displayed for editing by the operator using the keyboard, whereby the assembled document can be reviewed by the operator prior to printing.

Brief description of the drawing

Figure 1 is a pictorial representation of a page of a footnoted document illustrating the handling of a partial footnote.

Figure 2 is a pictorial representation of a succeeding page of the footnoted document illustrating the handling of two footnote references on a last line of body text.

Figure 3 is a pictorial representation of yet another succeeding page of the footnoted document illustrating the handling of long footnotes.

Figure 4 is a pictorial representation of a body text frame including inputted body text to the point of a footnote reference.

Figure 5 is a pictorial representation of a footnote text frame including inputted footnote text to be referenced by the reference point in Figure 4.

Figure 6 is another pictorial representation of the body text frame shown in Figure 4 having additional inputted body text to the point of second footnote reference.

Figure 7 is a pictorial representation of a footnote text frame having inputted footnote text for the second footnote reference in Figure 6.

Figure 8 is a block diagram showing a word processing system used for performing the invention of this application.

Figure 9 is a block diagram illustrating the makeup of the processor shown in Figure 8.

Best mode for carrying out the invention

General description

For a more detailed understanding of the invention, reference is first directed to Figure's 1 through 3. In these figures are illustrated pages n, n+1, and n+2 which can represent any three consecutive pages of a footnoted document. The solid lines represent body text and the dashed lines represent footnote text.

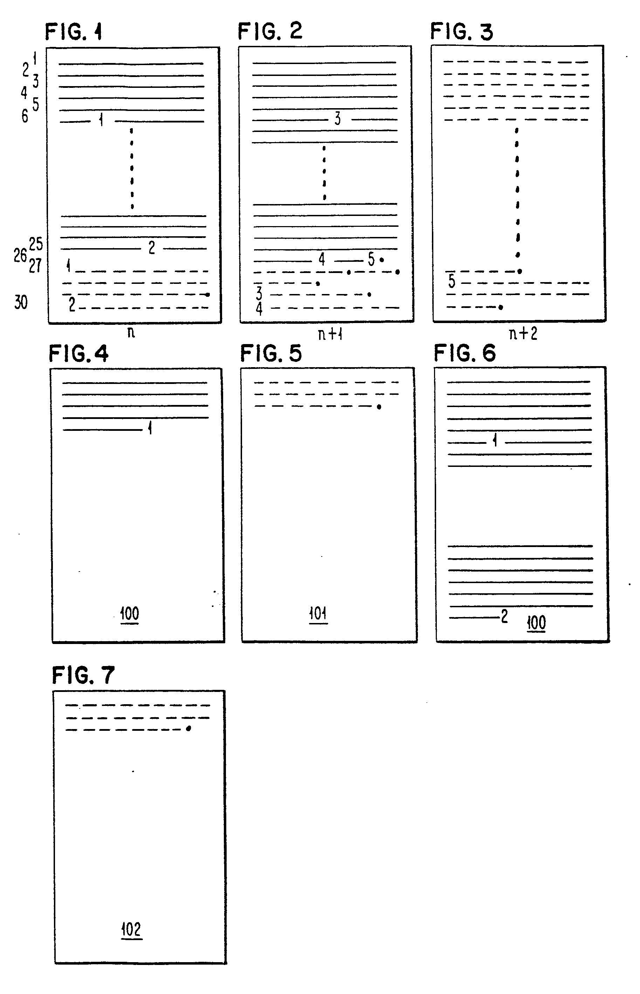

For purposes of the following explanation, it is to be assumed that each page contains 30 lines with the bottom four being dedicated to footnote text. Line numbers appear adjacent the left edge of page n in Figure 1. In addition, it is assumed that Arabic numerals have been chosen for designating footnote references and footnotes. Yet another assumption is that page n is the first page of a document containing a footnote reference.

Now it is to be further assumed that an operator is keying to a word processing system programmed and structured according to this invention, having a display sufficiently large enough to display any one of pages n through n+2, and that body text has been keyed or input to the point of footnote reference numeral 1 in page n. The keying of body text is to a body text frame 100 shown, in Figure 4. At the point of footnote reference numeral 1, a footnoted text frame 101 shown in Figure 5 is called and presented to the operator for keying or inputting footnote text for footnote 1 in Figure 1. Also, the body text will be stored separately from the to-be-keyed footnote text. Upon completion of keying of the footnote text for footnote 1 in Fig. 5, the operator keys for recalling frame 100. At this time, the system will automatically store away the footnote text of frame 101 in a footnote library, recall frame 100, display the numeral 1 in frame 100, and await further operator keying of body text from the point of numeral 1 in frame 100.

Following keying to the point of footnote reference numeral 2 in Figure 6, the operator calls for a footnote frame 102 shown in Figure 7. For keying of the footnote text for footnote 2. Following the keying of footnote text for footnote 2 in frame 102, recall of frame 100 is again keyed, and the numeral 2 is displayed in frame 100 (Figure 6).

The above operations are continued for all footnote and body text to the end of page n+2 in Figure 3.

For purposes of further explanation, assume that the document input according to the above will consist of only the three pages illustrated in Figures 1—3. Following input, an assembly operation is required for merging the separately stored footnote and body text and for paginating the assembled document for ultimate printing. Performing the paginate/assembly operation will format the footnotes at the bottom of each page as shown in Figures 1—3 for both display and printing purposes. One advantage of this invention is that the operator may view exactly how the footnotes will appear with the body text prior to printing.

Another advantage is that the system handles all numbering chores automatically. This is so not only on input, but during any later editing involving insertion, deletion, repositioning of footnotes and footnote references. This is also regardless, of any operator specified beginning numbering and any operator specified intermingling of the types of numbering. That is, an operator can specify any beginning number, and can later in the document switch to numbering with graphic symbols.

From the above, both Arabic numerals or numeric characters, and graphic symbols can be used for numbering. When numeric characters are selected, there will be an incrementing by one of an initially selected number for each following designation of a footnote reference. When graphic symbols are selected, there will be an increase by one in the number of symbols for each following designation of a footnote or footnote reference.

For example, the number 3 can be selected. If so, and from the above, the following designation will include the number 4. If two asterisks are selected as a beginning designation, the following designation will be three asterisks. This is since the system is programmed to sequence the designations. The system is also programmed to sequence intermingled designations. For example, if the order of designations is 3, 4**, and ***, and the operator again calls for Arabic numerals, the next designation will be the number 5. In addition, an operator can specify a resetting of the numbering to that initially defined such that, for example, designations are chapter or page oriented. That is, footnotes and footnote references can be renumbered beginning with the number 1 at the beginning of each chapter or page of a book.

The footnote and footnote reference designations are initially defined by the operator specifying or selecting choices from a menu at the beginning of the job of document preparation. These selections will remain in effect until changed. Operator tasks of specifying and defining designations will be brought out in greater detail later in the specification. For now though, it is sufficient to note that flexibility is broadened greatly from any capability envisioned by the prior art.

Detailed description

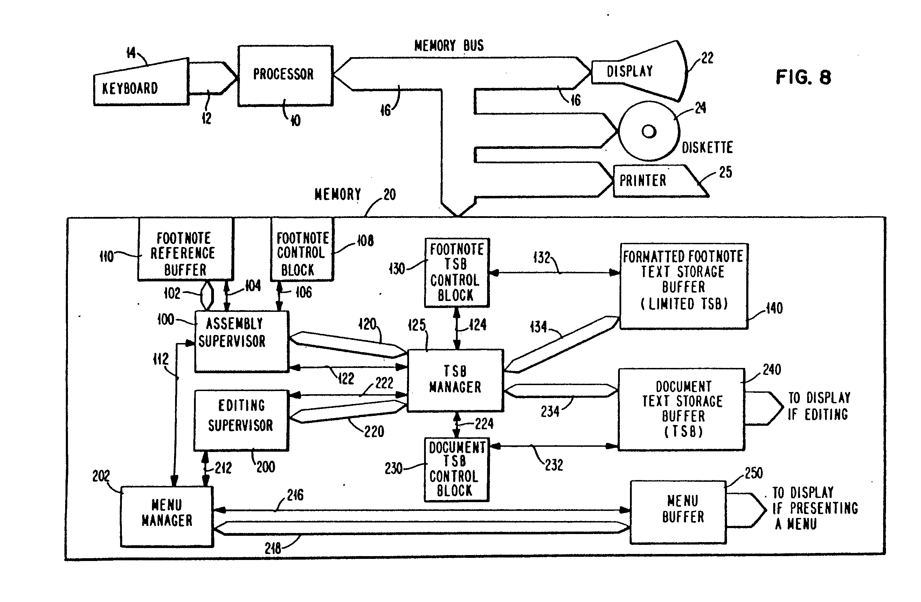

Refer next to Fig. 8. In this figure is shown a portion of a text processing system, including a processor 10 to which is connected a bus 12 leading from a keyboard 14. Character data generated by manual actuation of keys on keyboard 14 causes character related signals to be applied to processor 10. Processor 10 provides on an output memory bus 16 a data stream in which the characters selected by actuation of keyboard 14 appear suitably encoded.

Keyboard 14 is made up of a standard set of alpha/numeric graphic keys for keying characters, numbers, punctuation marks, and symbols, and also includes function and format control keys for causing and controlling a carriage return, indent tab, etc. In addition, the keyboard includes a second set of control keys for issuing special control commands to the system. These control keys are for controlling cursor movement, for setting the keyboard into a number of different modes, for use in conjunction with other keys for defining and controlling operations and other functions, etc.

Memory bus 16 extends to a memory unit 20 which is preferably a random access memory, to a display unit 22, to a diskette unit 24, and to a printer 25.

Included within memory unit 20 are two text storage buffers. One is a formatted footnote text storage buffer (TSB) 140 and the other a document TSB 240. The formatted footnote TSB 140 is used only by an assembly supervisor 100 when a limited footnote resolution algorithm is used to resolve and format footnotes at the bottom of a page. The document TSB 240 is used as a window into indefinite length text pages stored on a diskette readable by unit 24. Both assembly supervisor 100 and an editing supervisor 200 use the document TSB 240.

A footnote TSB control block 130 is linked to formatted footnote TSB 140 via a channel 132. A document TSB control block 230 is linked to document TSB 240 via a channel 232.

TSB manager 125 is linked by channels 124 and 224 to footnote TSB control block 130 and document TSB control block 230, respectively.

TSB manager 125 is linked by channels 134 and 234 to formatted footnote TSB 140 and document TSB 240, respectively. Editing supervisor 200 is linked via channels 220 and 222 to TSB manager 125. Editing supervisor 200 contains keystroke processing routines which are invoked based on the key pressed on keyboard 14.

In operation of the system of Fig. 8, a body text encoded data stream applied along memory bus 16 is stored in document TSB 240. In a process of correction and editing the contents of the body text in document TSB 240, selected portions or lines of a page are presented to the operator on display unit 22.

In addition to editing the contents of the body text, editing supervisor 200 may also create and revise footnotes within document TSB 240 in order that footnotes of indefinite length can be supported.

A menu manager 202 is linked via channels 112 and 212 to assembly supervisor 100 and editing supervisor 200, respectively, and is used when a menu is to be displayed. Menu manager 202 is linked via channels 216 and 218 to a menu buffer 250.

Assembly supervisor 100 is linked to TSB manager 125 via channels 120 and 122. Assembly supervisor 100 provides control routines necessary to execute an assembly operation for paginating and merging body text stored in document TSB 240 with formatted footnote text stored either in formatted footnote TSB 140 (if all of the formatted footnote text for the body text page will fit) or on a diskette.

Assembly supervisor 100 is linked to a footnote control block 108 via channel 106. Footnote control

4

blcok 108 is used to store status information during the assembly operation for resolving and formatting footnotes.

Assembly supervisor 100 is linked to a footnote reference buffer 110 via channels 102 and 104. Footnote reference buffer 110 contains pointers to diskette stored footnote text which has not yet been placed at the bottom of a page or at the end of the document during the assembly operation.

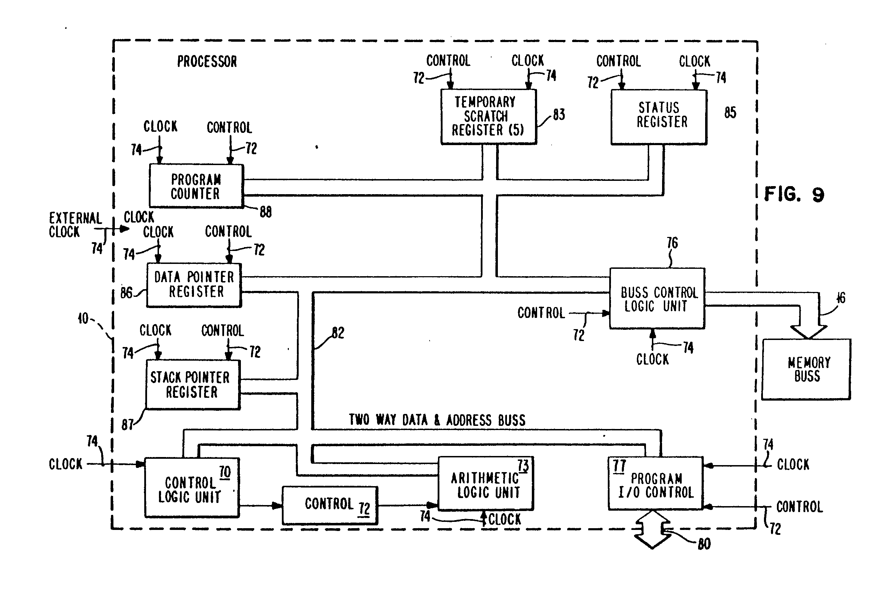

Refer next to Fig. 9. In this figure are shown the details of processor 10 which is capable of performing the operations of this invention under program control. In practice, processor 10 includes an INTEL 8086 Microcomputer chip. Typical logic hardware elements forming processor 10 include a control logic unit 70 which responds to instructions from memory 20 on bus 16. The control logic unit 70 is also in the data stream identified by the data and address bus 82 interconnected to various other logic units of processor 10.

In response to instructions from random access memory 20, control logic unit 70 generates control signals to other logic elements of processor 10. These control signals are interconnected to the various elements by means of a control line 72 which is illustrated directly connected to an arithmetic logic unit 73 and identified as a "control" line 72 to other elements of processor 10. Synchronous operation of the control unit 70 with other logic elements or processor 10 is achieved by means of clock pulses input to processor 10 from an external clock source on bus 74. This bus is also shown interconnected to various other logic elements of processor 10.

Data to be processed in processor 10 is input either through a bus control logic unit 76 or a program input/output control logic unit 77. The bus control logic 76 connects to random access memory 20 and receives instructions for processing data input to input/output control 77. Thus, input/output control 77 receives data from keyboard 14 while bus control logic 76 receives instructions from memory 20. Note that different storage sections of memory 20 are identifiable for instruction storage and data storage. Device controls from processor 10 are output through program input/output controller 77 over a data bus 80.

Input data on the data bus 16 is passed internally through processor 10 on the bus 82 to control unit 70. Arithmetic logic unit 73, in response to a control signal on line 72 and in accordance with instructions received on memory bus 16, performs arithmetic computations which may be stored in temporary scratch registers 83. Various other transfers of data between the arithmetic logic unit 73 and other logic elements of processor 10 are of course possible. Such additional transfers may be to a status register 85, data pointer register 86 or a stack pointer register 87. Also in the data stream for these various logic elements by means of the bus 82 is a program counter 88.

A particular operating sequence for processor 10 is determined by instructions on bus 16 and input data on the bus 16 or on bus 80 from keyboard 14. As an example, in response to received instructions, processor 10 transfers data stored in scratch registers 83 to one of registers 86, 87, or 85. Such operations of processors as detailed in Fig. 9 are considered to be well known and understood by one of ordinary skill in the data processing field. A detailed description of each of the operations of the processor of Fig. 9 for the described invention would be counter-productive to an understanding of the invention as claimed.

Table 1 illustrates a routine used by processor 10 for soliciting operator input of footnote formatting information.

## 0 094 546

TABLE 1
FOOTNOTE FORMAT ROUTINE

```
BEGIN (FN FMT)
   INITIALIZE WORK SPACE AND CONTROL BLOCKS
   COPY CURRENT VALUE OF ALL MENU OPTIONS
   INITIALIZE DFD (DYNAMIC FRAME DESCRIPTOR) WITH
   MENU OPTION VALUES
   UNTIL MENU IS SUCCESSFULLY EXITED OR CANCELLED DO
      DISPLAY FOOTNOTE FORMAT MENU
UNTIL MENU MANAGER
      RETURNS
      VALIDATE/COMPARE VALUES
      IF THE "CHANGE FOOTNOTE TYPING OPTIONS"
      DIRECTIVE OPTION WAS SELECTED THEN
        DISPLAY FOOTNOTE TYPING OPTIONS MENU AND SAVE
        OPERATOR INPUT FOR LEADING/TRAILING CHARACTERS
        AND "FOOTNOTE CONTINUED" TEXT
      ELSE
        IF A PARAMETER CONFLICT EXISTS THEN
          POST OPERATOR MESSAGE
        ELSE
          INDICATE FOOTNOTE FORMAT MENU HAS SUCCESSFULLY
          EXITED
        ENDIF
      ENDIF
   ENDDO
   FREE WORK SPACE
   RETURN
END TABLE 1 (FN FMT)
```

### FOOTNOTE FORMAT

If a "Change Footnote Format" option is selected in a Format Selection menu presented to the operator for any number of tasks, then the system displays a Footnote Format menu as shown in MENU 1 below.

The Footnote Format is a part of both the Document and Alternate Document Format of the document. The Document and Alternate Document Format are two independent sets of formats which the operator may begin using at the top of any page in the document. Unless specified otherwise, the system defaults to the Document Format.

6

**0 094 546**

MENU 1

| Chg Document Fmt | Brief | Ins |
| --- | --- | --- |
| DSK001 | | Kyb 1 Pitch 12 |

FOOTNOTE FORMAT

| ID | ITEM | YOUR CHOICE | POSSIBLE CHOICES |
| --- | --- | --- | --- |
| a | Typestyle Number | | 1—31 (10 Pitch)<br>80—111 (12 Pitch)<br>154—175<br>(Proportional)<br>215—230 (15 Pitch) |
| b | Separator Character | — | Any available character |
| c | Number of Separator Characters | 20 | 1—450 |
| d | Maximum Number of Footnote Text Lines Per Page | 48 | 1—999 |
| e | Number of Lines Between Footnotes | 0 | 0—999 |
| f | Footnote Numbering | 1 | 1=Document<br>2=Page |
| g | Footnote Numbering Graphic | | Any available character, or none |
| h | Footnote Placement | 2 | 1=Document<br>2=Page |
| i | Change Footnote Typing Options | | |

When Finished with this menu, press ENTER.
Type ID letter to choose ITEM; press ENTER:

Each ITEM in MENU 1 is briefly described below.

Typestyle number:

A plurality of choices of fonts including a variety of typestyles and pitches are available from MENU 1. Both typestyle and pitch are determined by a FONT ID selected by the operator from POSSIBLE CHOICES. If no ID is specified, the system will use a Line Format typestyle default value.

Separator character:

Any graphic character available on a selected font can be specified or selected by the operator to form a separator line separating body and footnote text.

Number of separator characters:

The operator can specify the number of characters to be used in making up the separator line. The number will only be measure limited. It is to be noted that a blank line will always precede and follow the separator line.

Maximum number of footnote text lines per page:

The number specified by the operator will be the maximum number of lines available at the bottom of the page for footnote text. Included with this number will be a specified number of lines between footnotes. Not included in the specified number are the blank lines before and following the separator line, the

separator line, and a dedicated line at the bottom of the page. Although not included in the maximum number of footnote text lines, these lines are included in the total page line count.

Number of lines between footnotes:
The operator can specify the interfootnote line spacing for formatting purposes to improve aesthetics. Footnote text will always be single spaced.

Footnote numbering:
An operator can specify whether or not footnote numbering is to be reset at page boundaries.

Footnote numbering graphic:
If footnote numbering is to be reset at page boundaries and a non-numeric graphic character such as an asterisk is specified, the first footnote will be numbered "*", the second will be numbered "**", etc.

Footnote placement:
The operator can specify whether or not footnotes are formatted and placed at the bottom of each page or the end of the document.
Range: 1=Yes 2=No
Following selections from MENU 1 and depression of the ENTER key, a Footnote Typing Options Format menu will be presented to the operator. This is illustrated below as MENU 2 wherein choices are available for the fixed portion of both footnote and footnote reference designations. The type of the variable portions of the footnote and footnote reference designations is selected from MENU 1.

MENU 2

| Chg Document Fmt | Brief | Ins | |
|---|---|---|---|
| DSK001 · | | | Kyb 1   Pitch 12 |

FOOTNOTE TYPING OPTIONS

| ID | ITEM | YOUR CHOICE | POSSIBLE CHOICES |
|---|---|---|---|
| | For body text: | | |
| a | Leading Characters | "! INX UP" | Up to 8 Characters, or None |
| b | Trailing Characters | "! INX DOWN" | " |
| | For footnote text: | | |
| c | Leading Characters | "! INX UP" | " |
| d | Trailing Characters | "! INX DOWN" | " |
| e | 'Continued Footnote' (Footnote Continued) Message Characters | | |

When finished with this menu, press ENTER.
Type ID letter to choose ITEM; press ENTER:

An explanation of each ITEM listed in MENU 2 is set out below.

Leading characters:
These characters include both controls and graphics to be generated by the system immediately before the variable portion of the footnote and footnote reference designation both in body and footnote text.

Trailing characters:
These Characters include both controls and graphics to be generated by the system immediately after the variable portion of the footnote and footnote reference designation both in body and footnote text.

'Continued footnote' message characters:
Any character, tab, indent tab, space, required space, required backspace, or word underscore can be selected for system placement 1) following the last footnote line on a page, and 2) before the first footnote line on the next page when a footnote "spills over" from one page to the next.

When the operator completes entry of all desired choices and depresses the Enter key against a prompt to type the ID to choose an item displayed on the Prompt Line, the system will update the Document or Alternate Format of the document with the values selected by the operator and re-display the Format Selection menu.

Following the above set up routine, the operator is now ready to begin preparing a footnoted document.

Footnotes are created during the normal Create/Revise Document task via a Footnote instruction. When the operator selects "Footnote" from an Instruction Menu and depresses the Enter key, a Footnote Menu illustrated below as MENU 3 will be presented.

### MENU 3

| Create Document | Brief | Ins | | |
|---|---|---|---|---|
| DISK01 | | Pg. 1 | Ln.13 | Kyb 1 |

FOOTNOTE

| ID | ITEM | YOUR CHOICE | POSSIBLE CHOICES |
|---|---|---|---|
| a | Create/Revise Footnote Text | 1 | 1=Yes 2=No |
| b | Reset Footnote Number or Character | | |
| c | Document Name | | |
| d | Diskette Name | | |
| e | System Page Number | | |

When finished with this menu, press ENTER.
TYPE ID letter to choose ITEM; press ENTER:   .

The ITEMS against which the operator makes choices are described below.

Create or revise footnote text:
Operator selection here is for calling a blank footnote typing Frame illustrated as FRAME 1 later herein if typing a new footnote is in order, or a Footnote Typing Frame with an existing footnote as illustrated in FRAME 2 later herein in order for the operator to make revisions.

Reset footnote number or character:
This option is selected whenever the operator desires to override the automatic system-generated sequence of footnote numbering or designations (i.e., 1, 2, 3, . . .) by specifying a specific number or other graphic character or characters.

If a number is entered, then footnote numbering by the system will be reset to that value. If a graphic is entered, then the automatic sequencing of numeric values will be suspended until the next "null" or numeric value is encountered.

The following two items should only be selected if footnotes are to be stored in a document other than the editing document.

Document name:
Selection here is to 1) store footnote text to be created, 2) locate footnote text to be revised, or 3) locate existing footnote text to be included in the document.

Diskette name:
The name of the diskette on which the above document resides is entered by the operator.

System page number:
An entry here is for calling a page which contains the footnote text. If both the Document Name and

Diskette Name are blank, then the system will assume that footnote text is to be stored with the document being created or edited. The system will store the footnote text on the next available page on or above 9000 (i.e., 9000, 9000.0.1, 9000.0.2, . . .) and after existing footnote pages.

If the operator specifies another Document Name/Diskette Name, then any page number of that document may be used to store the footnote text. If no page number is specified, then the first available page will be used. The operator may also specify that a particular existing page number be used by selecting this ITEM and entering the page number.

The Footnote Instruction thus created in memory will have the following make up:
1) Footnote Reference Control (FTR) followed by the following controls:
2) Begin Formatted Text Control (BFT)
3) Leading characters
4) Footnote number
5) Trailing characters
6) End Formatted Text Control (EFT)

The BFT/EFT control pair is used by the system to identify data that was generated by the system and may be later updated or modified by the system.

The value of the footnote number itself may be:
1) Sequentially assigned by the system when the footnote instruction is created (and prior to assembly for merging and paginating the footnote and body text).
2) Explicitly assigned by the operator when the footnote instruction is created.
3) Determined by the system during the assembly operation.

As a result, a footnote number (together with any leading and/or trailing characters) will always appear in the body text after a footnote instruction is created.

Upon revising a footnote instruction, the Footnote Instruction can be altered by placing the cursor on the Footnote Instruction and pressing the Enter key. The Footnote Menu (MENU 3) will be recalled.

During creation or revision of footnote text, if "Create or Revise Footnote Text" is set to "Yes" in the Footnote Menu (MENU 3), a Footnote Typing Frame (Frames 1 and 2) will be displayed when the ENTER key is depressed.

FRAME 1
(Footnote typing frame—create)

| Create Footnote | Brief | Ins | | |
|---|---|---|---|---|
| DISK01 | Pg. 1 | Ln. 13 | Kyb 1 | Pitch 12 |

When finished, press ENTER.

FRAME 2
(Footnote typing frame—revise)

Revise Footnote ·
DISK01

J. J. Vreeland, What to Look for When You Review Programming Documents for Product Usability, Technical Report TR03.124 (December, 1980); may be obtained from the IBM Corporation, Santa Teresa Laboratory, 555 Bailey Avenue, P. O. Box 50020, San Jose, CA 95150.

When finished, press ENTER.

The format of the footnote text and the page presentation characteristics for footnotes are determined by the Document or Alternate Format and the Footnote Format. After the footnote and body text have been assembled, the footnote text will always be single spaced regardless of the line spacing of the body text. The Context Field on the First Status Line of the Footnote Typing Frames will display either "Create Footnote" or "Revise Footnote", as appropriate.

In order to create a reference to an already existing footnote, operator procedure is to specify the diskette name, document name, and page number for the footnote and set "Create or Revise Footnote Text" to "No" in the Footnote Menu (MENU 3). After the operator has specified the document name and diskette name the first time a footnote was included, the default will be previous document and diskette name used.

During document assembly, body text and footnote text are resolved. Resolution requires combination pagination and merge operations if both body and footnote text are to appear on the same page.

Footnote text is formatted for output to a display for review or to a printer by either a Paginate Document task, a Merge task, or a Paginate/Hyphenate option of a Check Document task. The Paginate Document task will assemble the document to permit the operator to view the pages of the document made up of body and footnote text exactly as it will be printed.

The makeup of the footnote text at the bottom of the page will be:

Begin Formatted Text Control (BFT)
Line Format Change (to set footnote format)
Begin Keep Control
Required Carrier Return (for blank line above separator line)
Separator line, Required Carrier Return
Required Carrier Return (for blank line below separator line)
Footnote Text
Line Format Change (to return to format prior to footnote)
"n" number of indent tabs (where "n" is determined from the indent
level at the Begin Formatted Text control).
End Keep Control
End Formatted Text Control (EFT).

The Footnote reference number or other designation in the body text will be used to determine the footnote number or other designation to be printed and displayed. The system will automatically insert footnote designations together with any leading and trailing characters at the beginning of the footnotes automatically during assembly only.

Ordinarily, the system will assign footnote numbers in sequential order. However, if the operator has specified that a particular number be used, the system will assign that number to the footnote, and subsequent system assigned numbers will be determined using that number as a base.

Automatic sequencing may be interrupted by the presence of non-numeric footnote reference designations. The next numeric footnote reference will resume the automatic sequencing by the system.

If footnotes are inserted, moved, or deleted from the assembled document, then the document must be reassembled to renumber the footnotes.

Table 2 describes the routine performed by the assembly supervisor 100. This is the main routine that controls the pagination and merge operations.

This main routine (DOCPA) invokes other routines to adjust lines, make page ending decisions, and process, format, and renumber footnotes.

TABLE 2

```
BEGIN (DOCPA)
   OBTAIN FORMATTING INFOMATION FOR DOCUMENT
   INITIALIZE CONTROL BLOCKS AND WORK AREAS
   GO TO STARTING PAGE
   IF PRESERVE PAGE. ENDINGS IS NOT INDICATED THEN
      UNTIL END OF DOCUMENT OR CANCEL PRESSED DO
         IF READJUSTING LINE AND A FOOTNOTE WAS
         ENCOUNTERED ON THAT LINE THEN
            INVOKE (FNNUM)—UPDATE/INSERT FOOTNOTE
            NUMBER IN BODY TEXT
         ENDIF
         IF SPELL-ASSISTED HYPHENATION IS ON THEN
            PERFORM SPELLING-ASSISTED HYPHENATION WITH
            LINE ADJUST
         ELSE
            PERFORM LINE ADJUST
         ENDIF
         IF THE LINE IS NOT TO BE READJUSTED THEN
            CALL (LINEPOS) TO DETERMINE IF LINE POSITION
            CAUSES A PAGE END DECISION
            IF PAGE END DECISION THEN
               DETERMINE LOCATION OF PAGE END
            ELSE
               IF LINE END CODE IS A PE OR RPE THEN
                  INDICATE PAGE END DECISION
               ENDIF
            ENDIF
            IF PAGE END DECISION THEN
               CALL (PAGEEND) TO INSERT A PAGE END AND
               INCREMENT THE POINT OF OPERATION TO NEXT
               PAGE
            ELSE
               INCREMENT PAST LINE END CODE
            ENDIF
         ENDIF
      ENDDO
      INVOKE (EDOC)—FOOTNOTE END OF DOCUMENT
      PROCESSOR
   ENDIF
   CLEANUP AFTER TERMINATING PAGINATE
   CLEANUP FOOTNOTE PROCESSING
   FREE WORK AREAS
   END TABLE 2 (DOCPA) RETURN TO CALLER
```

Table 3 describes a subroutine (LINEPOS) of the routine DOCPA. This subroutine calculates the positional change caused by line ending codes. The paginator (DOCPA) uses this information in determining where to make page ending decisions. The subroutine (LINEPOS) also invokes a routine (RSOLVE) to fetch and resolve footnote text.

TABLE 3

```
BGNPROC (LINEPOS)
   DETERMINE LINE POSITION CHANGE
   IF THE LINE END CAUSES THE LINE POSITION TO CHANGE
   THEN UPDATE THE LINE POSITION CHANGE BY THE LINE
   SPACING
      SAVE LINE SPACING
   ENDIF
   OBTAIN THE LINE DENSITY FOR 1 LINE
   SAVE THE LINE DENSITY FOR THE LINE SPACING
   CALCULATE AND SAVE THE LINE POSITION CHANGE AT THE
   END OF THE LINE
   IF A FOOTNOTE REFERENCE WAS ENCOUNTERED ON THE
   LINE THEN
      INVOKE (RSOLVE)—RESOLVE FOOTNOTE INTO THE
      FOOTNOTE BUFFER
   ENDIF
   IF FOOTNOTE ROUTINE WANTS PAGE END DECISION THEN
      SET PAGE END DECISION
   ENDIF
   ADD LINE POSITION ESCAPEMENTS TO PENDING FOOTNOTE
   ESCAPEMENTS
   DETERMINE NUMBER OF LINES FROM BOTTOM OF PAGE
   DETERMINE NEW LINE POSITION
ENDPROC TABLE 3 LINEPOS
```

Table 4 describes a subroutine (PAGEEND) of the routine DOCPA that makes page ending decisions by inserting a page end code into the document TSB 240. Prior to inserting the page end code, the subroutine (PAGEEND) invokes a routine (EPAG) to process and insert all footnote text accumulated in the formatted footnote TSB 140 or stored on diskette unit 24 into document TSB 240.

TABLE 4

```
BGNPROC PAGEEND
   IF THERE IS PENDING FOOTNOTE TEXT THEN
      INVOKE (EPAG)—FOOTNOTE END OF PAGE PROCESSOR
   ENDIF
   IF NOT A PAGE END CODE THEN
      INSERT THE PAGE END CODE
   ELSE
      MOVE ACROSS PAGE END
      EXIT IF END OF TEXT PAGES
      MOVE TO START OF TEXT ON NEXT PAGE
   ENDIF
   IF PRINT INDICATED THEN
      PRINT PAGE
   ENDIF
ENDPROC TABLE 4 PAGEEND
```

Table 5 describes the routine (FNNUM) which determines the type of footnote numbering or designations to be used and when to reset and/or increment the numbering or designations.

TABLE 5

```
BEGIN (FNNUM)
   IF FOOTNOTE REFERENCE RESETS THE FOOTNOTE NUMBERING
   THEN
      RESET THE FOOTNOTE COUNTER TO THE SPECIFIED VALUE
      INSERT THE COUNTER INTO THE BODY TEXT
   ELSE
      IF THIS IS THE FIRST FOOTNOTE OF THE DOCUMENT AND
      NUMBERING IS NOT BEING DONE ON A PER PAGE BASIS
      THEN
         SET THE FOOTNOTE COUNTER TO 1
         INSERT THE COUNTER INTO THE BODY TEXT
      ELSE
         INCREMENT THE FOOTNOTE COUNTER
         IF THIS IS THE FIRST FOOTNOTE OF A PAGE AND
         NUMBERING IS BEING DONE ON A PER PAGE BASIS THEN
            SET THE FOOTNOTE COUNTER TO 1
         ENDIF
         IF FOOTNOTE GRAPHIC NUMBER IS NOT SPECIFIED THEN
            INSERT THE COUNTER INTO THE BODY TEXT
         ELSE
            SET I=FOOTNOTE COUNTER
            DO UNTIL I=0
              INSERT FOOTNOTE GRAPHIC
              I=I-1
            ENDDO
         ENDIF
      ENDIF
   ENDIF
END TABLE 5 (FNNUM)
```

The routine RSOLVE in Table 6 is invoked by the paginator routine (DOCPA) if the footnote placement is specified to be "bottom of page" not "bottom of document". If the footnote placement is specified to be "bottom of document", then resolution occurs in the routine EDOC. Its function is to resolve one or more footnote reference controls that the paginator encountered after adjusting the cursored body text line during document pagination. Note that the paginator (DOCPA) invokes this routine only after completing the line adjustment of the cursored line and additionally determined that the cursored line will fit on the current page. This routine:

a) insures that the footnote format values are in a range that will enable feasible resolution. These include the maximum number of footnote text lines, and the number of blank lines between footnotes,

b) determines whether the current page is to be terminated prematurely. This occurs when the first footnote text line for the footnote reference that is being processed will not appear on the same page as its reference. This usually occurs when there is enough footnote text pending such that the maximum number of footnote text lines is surpassed,

c) resolves the footnote references encountered on the current line via the invocation of routine GETFN to fetch and resolve each footnote reference.

TABLE 6

```
BEGIN (RSOLVE)
   IF THERE ARE FOOTNOTES TO RESOLVE FOR THE CURRENT
   LINE THEN
      IF AT LEAST ONE MORE FOOTNOTE TEXT LINE WILL FIT
      AT THE BOTTOM OF THE CURRENT PAGE BEING
      PAGINATED THEN
      IF THE RESOLUTION ALGORITHM TO BE USED IS THE
         LIMITED TSB ALGORITHM THEN
            INITIALIZE THE FORMATTED FOOTNOTE LIMITED TSB
            INVOKE GETFN—RESOLVE/FORMAT FOOTNOTES ON
            THIS LINE
            IF THE FORMATTED FOOTNOTE LIMITED TSB BECAME
            FULL THEN
               RESTORE POINT OF OPERATION TO THE FIRST
               FOOTNOTE OF THIS PAGE
               RE-INITIALIZE PARAMETERS FOR THE FIRST
               FOOTNOTE OF THIS PAGE
               INVOKE GETFN—RESOLVE/FORMAT FOOTNOTES ON
               THIS LINE USING INDEFINITE LENGTH ALGORITHM
            ENDIF
         ELSE
            INVOKE GETFN—RESOLVE/FORMAT FOOTNOTES ON
            THIS LINE USING THE INDEFINITE LENGTH
            ALGORITHM
         ENDIF
      ELSE
         INDICATE PREMATURE PAGE TERMINATION DUE TO
         INSUFFICIENT ROOM AT THE BOTTOM OF THE PAGE FOR
         ONE MORE FOOTNOTE TEXT LINE
      ENDIF
   ENDIF
   RETURN
END TABLE 6 (RSOLVE).
```

The routine GETFN in Table 7 is invoked by the routine RSOLVE to perform the actual resolution of footnote references. Its function is to resolve each footnote reference control that the paginator encountered after adjusting the cursored body text line. It is already assumed that there is room at the bottom of the page for at least one more footnote text line and that the footnote placement is the bottom of page, not end of document.

Resolution is performed one of two ways:

If all of the footnotes on a page can be copied and formatted into the formatted footnote TSB (140), then the limited footnote algorithm is used. This method does a minimal amount of diskette accessing and performs almost all processing in memory. The result is fast formatting and resolution of each footnote reference since all of the formatted footnotes will be in memory when the routine EPAG is called at the end of the page to insert the footnotes at the bottom of the page.

This method is used most of the time for footnote placement at the bottom of a page unless very large footnotes are being processed.

If not all of the footnotes on a page will fit into the formatted footnote TSB 140, then the indefinite footnote algorithm is used. This involves storing the current body text page back onto the diskette unit 24 and moving the TSB point of operation to the page that contains the footnote text to be formatted and resolved (even if the page is in another document). Once the footnote is formatted it is stored back onto the diskette and the TSB point of operation is moved back to its original point in the body text page. With this approach the routine EPAG will fetch the footnote text from diskette unit 24 to the bottom of the page.

Resolution typically involves the following items:

Formatting the footnote text based on the active footnote format. This implies that the Document or Alternate Document Format (whichever is active) will be scanned in order to obtain the parameters required to format the footnote text correctly.

Inserting the appropriate footnote number bracketed within a BFT/EFT control sequence with the appropriate leading/trailing text and/or controls prior to the footnote text.

Calculating the number of footnote text lines corresponding to the footnote reference being processed.

Updating the number of pending footnotes on the current line to be inserted.

Calculating the total vertical escapement due to footnote text that is to be inserted at the bottom of the page. This value is used by the paginator in its page ending decision logic.

**0 094 546**

TABLE 7

```
BEGIN
  OBTAIN ADDRESSABILITY TO THE FIRST FOOTNOTE
  REFERENCE TO BE RESOLVED
  UNTIL THERE ARE NO MORE FOOTNOTES TO BE RESOLVED DO
    IF PERFORMING LIMITED RESOLUTION AND BLANK LINES
    MUST BE INSERTED TO DELIMIT THIS FOOTNOTE THEN
      INSERT THE BLANK LINES VIA PROGRAM SEGMENT
      BLANK_LN
    ENDIF
    COPY THE FOOTNOTE TEXT INTO THE LIMITED TSB AND
    DETERMINE THE NUMBER OF FOOTNOTE TEXT LINES VIA
    THE PROGRAM SEGMENT COPY_FN
    IF PERFORMING LIMITED RESOLUTION AND THE ENTRY
    COULD NOT BE RESOLVED SUCCESSFULLY THEN
      INSERT INTO THE LIMITED TSB THE APPROPRIATE
      ERROR MESSAGE
    ENDIF
    OBTAIN THE NUMBER OF LINES FOR THIS FOOTNOTE
    REFERENCE
    CALCULATE THE VERTICAL ESCAPEMENT THAT WILL BE
    GENERATED FOR THE FOOTNOTE TEXT LINES
    CORRESPONDING TO THIS FOOTNOTE REFERENCE
    UPDATE THE TOTAL VERTICAL ESCAPEMENTS FOR ALL
    FOOTNOTES ON THIS PAGE
    SETUP TO PROCESS THE NEXT FOOTNOTE
  ENDDO
  UPDATE THE ESCAPEMENT VALUES FOR THE PAGINATOR VIA
  PROGRAM SEGMENT UPDATE
  SET AN APPROPRIATE EXIT RETURN CODE
  RETURN
BEGSEG (BLANK_LN)
  DETERMINE HOW MANY BLANK LINES MUST BE INSERTED TO
  PROVIDE FOOTNOTE SPACING
  IF THE PREVIOUS FOOTNOTE DID NOT END WITH A LINE
  ENDING CONTROL THEN
    INSERT A REQUIRED CARRIER RETURN TO FORCE THE
    POINT OF INSERTION FOR THE BLANK DELIMITER LINES
    .TO THE START OF A LINE
  ENDIF
  UNTIL ALL THE BLANK LINES ARE INSERTED INTO THE
  LIMITED TSB BUFFER DO
    INSERT A REQUIRED CARRIER RETURN PRIOR TO THE
    POINT OF OPERATION
  ENDDO
ENDSEG (BLANK_LN)
BEGSEG (COPY_FN)
  IF PERFORMING LIMITED FOOTNOTE ALGORITHM RESOLUTION
    THEN COPY THE FOOTNOTE TEXT INTO THE FORMATTED
    FOOTNOTE LIMITED TSB
  ELSE
    GO TO THE FOOTNOTE PAGE VIA THE INDEFINITE LENGTH
    DOCUMENT TSB BY MOVING THE TEXT STORAGE BUFFER
    POINT OF OPERATION TO THE DESIRED FOOTNOTE PAGE
  ENDIF
  INSERT THE FOOTNOTE NUMBER SEQUENCE PRIOR TO THE
  FOOTNOTE TEXT
  SETUP A COUNTER THAT WILL KEEP TRACK OF THE NUMBER
  OF FOOTNOTE TEXT LINES FOR THE FOOTNOTE REFERENCE
  CONTROL
  UNTIL THE END OF THE FOOTNOTE TEXT IS FOUND DO
    ADJUST THE FOOTNOTE TEXT LINE BETWEEN THE LEFT AND
    RIGHT MARGINS
    INCREMENT THE COUNTER THAT IS KEEPING TRACK OF THE
    NUMBER OF FOOTNOTE TEXT LINES
```

16

TABLE 7 (continued)

```
ENDDO
IF THERE ARE NO LINES IN THE FOOTNOTE TEXT PAGE THEN
  INSERT A REQUIRED CARRIER RETURN
  SET THE NUMBER OF LINES FOR THIS ENTRY TO 1
ENDIF
SAVE THE NUMBER OF TEXT LINES CALCULATED IN THE
ENTRY'S LINE COUNT FIELD
IF NOT PERFORMING LIMITED TSB MODE RESOLUTION THEN
  IF THE FOOTNOTE TEXT PAGE'S PAGE ENDING CONTROL IS
  NOT AT THE START OF A LINE THEN
    INSERT A REQUIRED CARRIER RETURN PRIOR TO THE
    PAGE END CONTROL
  ENDIF
  MOVE THE POINT OF OPERATION TO THE START OF THE
  FOOTNOTE TEXT PAGE
  DELETE THE FOOTNOTE NUMBER SEQUENCE. THE ROUTINE
  EPAG WILL INSERT LATER
  STORE THE FORMATTED FOOTNOTE TEXT PAGE BACK TO THE
  FOOTNOTE DISKETTE
ENDIF
ENDSEG (COPY_FN)
BEGSEG (UPDATE)
  DETERMINE THE MAXIMUM NUMBER OF FOOTNOTE TEXT LINES
  THAT MAY BE INSERTED IN A PAGE
  IF THE NUMBER OF AVAILABLE LINES TO INSERT IS
  GREATER THAN THE MAXIMUM NUMBER OF FOOTNOTE TEXT
  LINES THAT MAY BE INSERTED IN A PAGE THEN
    SET THE NUMBER OF AVAILABLE LINES TO INSERT EQUAL
    TO THE MAXIMUM NUMBER OF FOOTNOTE TEXT LINES THAT
    MAY BE INSERTED IN A PAGE
  ENDIF
  UPDATE THE NEW VALUE FOR NUMBER OF TEXT LINES TO
  INSERT
  UPDATE THE NEW VALUE FOR ESCAPEMENT DUE TO TEXT
  LINES THAT ARE TO BE INSERTED
  INSURE THAT THE CALCULATED ESCAPEMENT WILL ALL FIT
  IN THE CURRENT PAGE. ADJUST VALUE IF THE ESCAPEMENT
  IS TOO MUCH
ENDSEG (UPDATE)
END (GETFN)
```

The purpose of the routine EPAG in Table 8 is to move FORMATTED footnote text to the end of the current page. The footnote text resides either in the formatted footnote TSB 140 (if the limited algorithm is used) or on pages in the footnote library (in a separate document or on page 9000 or above if in the same document).

Upon invocation, a page end decision has been made by the paginator and the TSB point of operation is at the start of a line. This line will be forced to the next page via the insertion of a page end control, but before the page end control is inserted, this routine must insert (prior to the TSB point of operation) the appropriate number of formatted footnote text lines along with all the necessary formatting controls. All the information required for these insertions is available in the footnote control block 108 and footnote reference buffer 110.

After determining how many lines it must insert, this routine inserts the necessary formatting controls to precede the footnote text, the separator line, and the formatting controls to following the footnote text.

After the formatting controls are inserted, this routine either fetches all of the formatted footnote text from the formatted footnote TSB 140 (if the limited algorithm was able to be used) or (if the indefinite length algorithm had to be used) then it fetches in the footnote text for the first footnote. The footnote's respective entry in the footnote reference buffer 110 contains the pointers to each footnote text page. Note that the footnote reference buffer 110 causes the system to have an "internal resolution limit" of about 20 footnotes per page if each footnote is stored in a separate document and up to 142 footnotes per page if each footnote is stored on page 9000 or above of the same document that contains the body text with the corresponding footnote references.

If necessary, lines that have been inserted in the previous page will be deleted after the entire footnote text is fetched.

If the entire footnote fits and more footnote text is pending, the insertion sequence will continue with the next footnote.

If the entire footnote won't fit, then the footnote text that won't fit will be deleted. These lines will appear on the next page.

After the insertion is complete, the necessary pointers in the footnote resolution control block 108 are updated. The footnote resolution buffer will also be updated to reflect the insertions.

TABLE 8

```
BEGIN
    MODIFY THE VERTICAL ESCAPEMENT DUE TO PENDING
    FOOTNOTE TEXT LINES THAT ARE TO BE INSERTED AT THE
    BOTTOM OF THIS CURRENT PAGE DUE TO ANY "WIDOW" OR
    "ORPHAN" LINE DECISIONS MADE BY THE PAGINATOR
    IF IT HAS BEEN DETERMINED THAT THERE ARE FORMATTED
    FOOTNOTE TEXT LINES TO INSERT AT THE BOTTOM OF THIS
    CURRENT PAGE THEN
        SAVE THE CURRENT PAGE END LOCATION
        INSERT PRIOR TO THE CURRENT POINT OF OPERATION THE
        FOOTNOTE TEXT FORMATTING SEQUENCE THAT WILL
        ENCAPSULATE THE PENDING FOOTNOTE TEXT
        IF PERFORMING LIMITED MODE TSB ALGORITHM THEN
            INSERT THE PENDING FOOTNOTE TEXT VIA PROGRAM
            SEGMENT LIMITED
        ELSE
            INSERT THE PENDING FOOTNOTE TEXT VIA PROGRAM
            SEGMENT INDEF
        ENDIF
        RESTORE POINT OF OPERATION TO PAGE END LOCATION
    ENDIF
    RETURN
    BEGSEG (LIMITED)
    OBTAIN THE VERTICAL ESCAPEMENT OF THE FOOTNOTE TEXT
    LINES TO BE INSERTED
    IF THE INTERNAL RESOLUTION LIMIT HAS NOT BEEN
    REACHED AND ALL OF THE PENDING FOOTNOTE TEXT WILL
    FIT THEN
        INSERT ALL OF THE PENDING FOOTNOTE TEXT
    ELSE
        ADVANCE TO THE TOP OF THE LIMITED TSB BUFFER
        MOVE THE POINT OF OPERATION TO THE END OF THE LAST
        FOOTNOTE LINE THAT IS TO BE COPIED
        INSERT INTO PAGE THE FOOTNOTE TEXT THAT IS BOUNDED
        BY THE TOP OF LIMITED TSB BUFFER AND THE POINT OF
        OPERATION
    ENDIF
    UPDATE THE FOOTNOTE CONTROL BLOCK AND FOOTNOTE
    REFERENCE BUFFER TO REFLECT THE NUMBER OF FOOTNOTE
    TEXT LINES INSERTED
    ENDSEG (LIMITED)
    BEGSEG
    OBTAIN THE VERTICAL ESCAPEMENT DUE TO FOOTNOTE TEXT
    LINES THAT ARE TO BE INSERTED
    OBTAIN THE OFFSET TO THE FIRST FOOTNOTE ENTRY IN
    THE FOOTNOTE RESOLUTION BUFFER
    SETUP A COUNTER FOR THE NUMBER OF LINES INSERTED
    UNTIL ALL THE FOOTNOTE TEXT LINES THAT ARE TO APPEAR
    ON THIS PAGE ARE INSERTED DO
        IF THE FOOTNOTE REFERENCE WAS RESOLVED
        SUCCESSULLY THEN
            INSERT THE FOOTNOTE TEXT
        ELSE
            INSERT INTO TEXT THE APPROPRIATE FOOTNOTE
            RESOLUTION ERROR MESSAGE
        ENDIF
```

18

**0 094 546**

TABLE 8 (continued)

```
ADD TO THE COUNTER KEEPING TRACK OF HOW MANY LINES HAVE BEEN INSERTED THE NUMBER
OF INSERTED LINES
   FOR THIS FOOTNOTE
   SUBTRACT FROM THE COUNTER KEEPING TRACK OF HOW
   MUCH ESCAPEMENT REMAINS TO BE INSERTED BY THE
   INSERTED ESCAPEMENT
   IF THERE IS STILL MORE ROOM FOR FOOTNOTE TEXT THEN
      DETERMINE THE NUMBER OF BLANK LINES TO INSERT
      FOR FOOTNOTE SPACING
      DETERMINE THE ESCAPEMENT DUE TO THESE BLANK
      LINES
      IF THERE IS ROOM FOR THESE BLANK LINES THEN
        ADJUST THE INSERTION ESCAPEMENT COUNTER
        ACCORDINGLY
        ADJUST THE INSERTION LINE COUNTER ACCORDINGLY
        INSERT THE BLANK LINES INTO TEXT
        SETUP TO PROCESS THE NEXT FOOTNOTE
      ELSE
        INDICATE THAT NO MORE FOOTNOTE TEXT CAN BE
        INSERTED
      ENDIF
   ENDIF
ENDDO
UPDATE THE FOOTNOTE CONTROL BLOCK AND FOOTNOTE
REFERENCE BUFFER TO REFLECT THE NUMBER OF FOOTNOTE
TEXT LINES INSERTED
IF THERE WILL BE NO FOOTNOTE TEXT LINES FLOWING TO
THE NEXT PAGE AND SYSTEM IS PERFORMING REGULAR
   RESOLUTION THEN
      STOP USING THE INDEFINITE ALGORITHM SO THAT THE
      LIMITED ALGORITHM WILL BE USED ON THE NEXT PAGE
   ENDIF
ENDSET (INDEF)

END (EPAG)
```

TABLE 9

```
BEGIN (EDOC)
   IF FOOTNOTES ARE BEING PLACED AT THE END OF THE
   DOCUMENT AND THE END OF THE DOCUMENT HAS BEEN
   REACHED AND NO FOOTNOTE TEXT HAS BEEN RESOLVED THEN
      OBTAIN POINTER TO THE FOOTNOTE REFERENCE BUFFER
      CONTAINING POINTERS TO EVERY FOOTNOTE FOUND IN THE
      DOCUMENT
      UNTIL THE LAST REFERENCE HAS BEEN RESOLVED DO
         FETCH FOOTNOTE TEXT
         INSERT THE NUMBER OF BLANK LINES AS SPECIFIED BY
         THE "NUMBER OF BLANK LINES BETWEEN FOOTNOTES"
         PARAMETER
      ENDDO
   ENDIF
END TABLE 9 (EDOC)
```

**Claims**

1. A method of managing body and footnote text during processing a footnoted document in a word processing system comprising a keyboard (14), a display (22), a processor (10) and a memory (20), said method consisting in preparing the body text and the footnote text with the help of said keyboard and display, separately storing said footnote text and body text in said memory; said method being characterized by the following steps which are performed automatically by said processor:

— numbering a footnote reference point in said body text following preparation of a corresponding footnote,

19

**0 094 546**

— numbering said corresponding footnote with the same number used for numbering said footnote reference point, and

— merging said footnote text and said body text to form a footnoted document which can be displayed for editing by the operator using said keyboard, whereby the assembled document can be reviewed by the operator prior to printing.

2. Method according to claim 1 characterized in that an initial number is defined for the numbering of said footnote by selecting between a graphic symbol and numeric character.

3. The method according to claim 2 characterized in that it includes defining said initial number by selecting a number of graphic symbols.

4. The method according to claim 3 characterized in that it includes causing a following footnote reference point to be numbered with a number of graphic symbols increased by one over a previous number of graphic symbols used for numbering a previous footnote reference point.

5. The method according to any one of claims 2 to 4 characterized in that it includes selecting a graphic symbol following a selection of a numeric character and causing a following footnote reference point to be numbered with said selected graphic symbol.

6. The method according to any one of claims 1 to 5 characterized in that it includes paginating said footnoted document.

7. The method according to any one of claims 2 to 6 characterized in that it includes maintaining numbering sequencing following editing by updating all following numbering beginning with an updated number for a footnote reference point.

8. The method according to any one of the preceding claims characterized by the further steps of: inputting to said word processing system for defining a format for said footnote text by specifying

1) a maximum number of footnote text lines to be allowed on said pages of said document, and

2) an interfootnote spacing to be applied when a plurality of footnotes are to appear on said pages.

**Patentansprüche**

1. Verfahren der Verwaltung von Haupttext und Fussnotentext in der Verarbeitung eines Dokuments mit Fussnoten in einem Textverarbeitungssystem mit einer Tastatur (14), einer Anzeige (22), einem Prozessor (10) und einem Speicher (20) wobei besagtes Verfahren darin besteht, den Haupttext und den Fussnotentext mit Hilfe der besagten Tastatur und Anzeige vorzubereiten und wobei der besagte Fussnotentext und der Haupttext im besagten Speicher getrennt angelegt werden; Verfahren dadurch gekennzeichnet, dass folgende Schritte vom besagten Prozessor automatisch ausgeführt werden:

— Versehen eines Fussnotenbezugspunktes in besagtem Haupttext mit einer Nummer nach dem Anlegen einer entsprechenden Fussnote,

— Versehen der besagten entsprechenden Fussnote mit der gleichen Nummer, die für den Fussnotenbezugspunkt verwendet wurde,

— Verschmelzen des besagten Fussnotentextes und des Haupttextes, um ein Dokument mit Fussnoten anzulegen, welches für die Ausgabe durch den Bediener mit Hilfe der besagten Tastatur angezeigt werden kann, wodurch das fertige Dokument vor dem Drucken vom Bediener überprüft werden kann.

2. Verfahren gemäss Anspruch 1, dadurch gekennzeichnet, dass eine Anfangsnummer für die Numerierung der besagten Fussnoten festgelegt wird, durch Auswahl zwischen einem graphischen Symbol und einem numerischen Zeichen.

3. Verfahren gemäss Anspruch 2, dadurch gekennzeichnet, dass es die Festlegung der besagten Anfangsnummer durch Auswahl einer Anzahl graphischer Symbole enthält.

4. Verfahren gemäss Anspruch 3, dadurch gekennzeichnet, dass ein folgender Fussnotenbezugspunkt mit einer Anzahl graphischer Symbole numeriert wird, die um 1 beaufschlagt wird, gegenüber einer vorangehenden Anzahl graphischer Symbole, die für die Numerierung eines vorangehenden Fussnotenbezugspunktes verwendet wurde.

5. Verfahren gemäss einem der Ansprüche 2 bis 4, dadurch gekennzeichnet, dass es die Auswahl eines graphischen Symbols enthält, das einer Auswahl eines numerischen Zeichens folgt, und bewirkt, dass ein folgender Fussnotenbezugspunkt mit besagtem graphischem Symbol numeriert wird.

6. Verfahren gemäss einem der Ansprüche 1 bis 5, dadurch gekennzeichnet, dass es die Seitennumerierung des Dokumentes mit Fussnoten enthält.

7. Verfahren gemäss einem der Ansprüche 2 bis 6, dadurch gekennzeichnet, dass darin die Numerierungssequenz nach der Edition durch Neunumerierung aller folgenden Nummern enthält, von einer berichtigen Nummer für einen Fussnotenbezugspunkt an.

8. Verfahren gemäss einem der vorangehenden Ansprüche, ferner durch folgende Schritte gekennzeichnet:

Eingabe in das besagte Textverarbeitungssystem für die Festlegung eines Formats für den besagten Fussnotentext durch Angabe:

20

# 0 094 546

1) einer maximalen Anzahl von Fussnotentextzeilen, die auf besagten Seiten des besagten Dokumentes bereitgestellt werdlen, und

2) eines Abstandes zwischen Fussnoten, der einzusetzen ist, wenn mehrere Fussnoten auf besagten Seiten erscheinen.

## Revendications

1. Une méthode de gestion d'un texte principal et des renvois au bas des pages pendant le traitement d'un document comportant des renvois au bas des pages dans un système de traitement de mots comprenant un clavier (14), une unité d'affichage (22), un processeur (10) et une mémoire (20), ladite méthode consistant à préparer le texte principal et le texte des renvois au bas des pages à l'aide desdits clavier et unité d'affichage, à emmagasiner séparément ledit texte des renvois au bas des pages et ledit texte principal dans ladite mémoire, ladite méthode étant caractérisée par les étapes suivantes qui sont exécutées automatiquement par ledit processeur:

— la numérotation d'un point de référence d'un renvoi en bas de page dans ledit texte principal à la suite de la préparation d'un renvoi de bas de page correspondant,

— la numérotation dudit renvoi de bas de page correspondant avec le même numéro utilisé pour numéroter ledit point de référence de renvoi de bas de page, et

— l'assemblage dudit texte des renvois de bas de page et dudit texte principal pour former un document comportant des renvois de bas de pages, qui peut être affiché pour édition par l'opérateur en utilisant ledit clavier, ce qui permet la révision du document assemblé par l'opérateur avant l'impression.

2. Méthode selon la revendication 1 caractérisé en ce qu'un nombre initial est défini pour la numérotation desdits renvois de bas de pages en choisissant un symbole graphique ou un caractère numérique.

3. La méthode selon la revendication 2 caractérisée en ce qu'elle comprend la définition dudit nombre initial par le choix d'un certain nombre de symboles graphiques.

4. La méthode selon la revendication 3 caractérisée en ce qu'elle comprend la numérotation d'un point de référence de renvoi de bas de page suivant avec un nombre de symboles graphiques augmenté de un par rapport à un nombre précédent de symboles graphiques utilisés pour la numérotation d'un point de référence de renvoi de bas de page précédent.

5. La méthode selon l'une quelconque des revendications 2 à 4 caractérisée en ce qu'elle comprend la sélection d'un symbole graphique suivant une sélection d'un caractère numérique et provoquant la numérotation d'un point de référence de renvoi de bas de page avec ledit symbole graphique sélectionné.

6. La méthode selon l'une quelconque des revendications 1 à 5 caractérisée en ce qu'elle comprend la pagination dudit document comportant des renvois de bas de pages.

7. La méthode selon l'une quelconque des revendications 2 à 6 caractérisée en ce qu'elle comprend le maintien de la mise en séquence de numérotation à la suite de l'édition par la mise à jour de toute la numérotation suivante en commençant avec un nombre mis à jour pour un point de référence de renvoi de bas de page.

8. La méthode selon l'une quelconque des revendications précédentes caractérisée en ce qu'elle comprend les étapes supplémentaires suivantes:

l'application à l'entrée dudit système de traitement de mots pour définir un format pour ledit texte de renvoi de bas de page par la spécification

1) d'un nombre maximal de lignes de texte de renvoi de bas de page sur lesdites pages dudit document, et

2) de l'application d'un espacement entre renvois de bas de page lorsqu'une pluralité de renvois de bas de page doit être portée sur lesdites pages.

## FIG. 1

n

## FIG. 2

n+1

## FIG. 3

n+2

## FIG.4

100

## FIG. 5

101

## FIG. 6

100

## FIG. 7

102

FIG. 8

PROCESSOR

CONTROL 72  CLOCK 74    CONTROL 72  CLOCK 74

TEMPORARY SCRATCH REGISTER (5) 83    STATUS REGISTER 85

CLOCK 74  CONTROL 72

PROGRAM COUNTER 88

FIG. 9

EXTERNAL CLOCK 74  CLOCK

CLOCK 74  CONTROL 72

76

DATA POINTER REGISTER 86

BUSS CONTROL LOGIC UNIT

CONTROL 72

46

10

CLOCK 74  CONTROL 72

82

CLOCK 74

MEMORY BUSS

STACK POINTER REGISTER 87

TWO WAY DATA & ADDRESS BUSS

74  CLOCK

CONTROL LOGIC UNIT 70    CONTROL 72    ARITHMETIC LOGIC UNIT 73    PROGRAM I/O CONTROL 77    CLOCK 74

74  CLOCK

80

CONTROL 72

0 094 546